(19) Europäisches Patentamt
European Patent Office
Office européen des brevets

(11) **EP 2 107 358 A1**

(12) **EUROPEAN PATENT APPLICATION**
published in accordance with Art. 153(4) EPC

(43) Date of publication:
**07.10.2009 Bulletin 2009/41**

(51) Int Cl.:
*G01M 7/02* (2006.01)   *E02D 1/00* (2006.01)
*E02D 27/34* (2006.01)   *G01M 19/00* (2006.01)

(21) Application number: **08722603.1**

(22) Date of filing: **21.03.2008**

(86) International application number:
**PCT/JP2008/055239**

(87) International publication number:
**WO 2008/117743 (02.10.2008 Gazette 2008/40)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **23.03.2007 JP 2007077319**

(71) Applicant: **National University Corporation Saitama University**
**Saitama City, Saitama 338-8570 (JP)**

(72) Inventor: **SAITOH, Masato**
**Saitama-shi**
**Saitama 338-8570 (JP)**

(74) Representative: **Pellkofer, Dieter**
**Manitz, Finsterwald & Partner GbR**
**Martin-Greif-Strasse 1**
**80336 München (DE)**

(54) **ANALYSIS SYSTEM, ANALYSIS METHOD, PROGRAM AND MECHANICAL DEVICE**

(57) According to the present invention, an analysis system constructed as a rheology model of a foundation-ground system that is capable of expressing a frequency dependent dynamic spring by using elements with non-frequency-dependent coefficients may be provided. The analysis system according to the present invention is a model for reproducing dynamical characteristics of a system including the foundation and the ground. The analysis system includes an elastic element 10, a damper element 20 for damping vibration, and a reaction force generation element 30 that generates reaction force proportional to relative acceleration of both ends thereof. The analysis system is constructed as a base system 40 in which the elastic element 10, the damper element 20 and the reaction force generation element 30 are connected in parallel. Also, the analysis system may include at least one core system 50, 60 provided with any of two elements among the elastic element, the damper element and the reaction force generation element connected in parallel, and a remaining element connected serially thereto. And the base system and at least one core system may be connected in parallel to construct the analysis system.

[Fig. 4]

**Description**

[FIELD of Invention]

The present invention relates to an analysis system, an analysis method for numerically analyzing based on an analysis model, a computer-readable program for implementing the analysis method, and a machine device integrated into a vibration test apparatus as the analysis model, which are used for evaluating seismic behavior of an upper-structure supported by the ground through a foundation.

[Background Art]

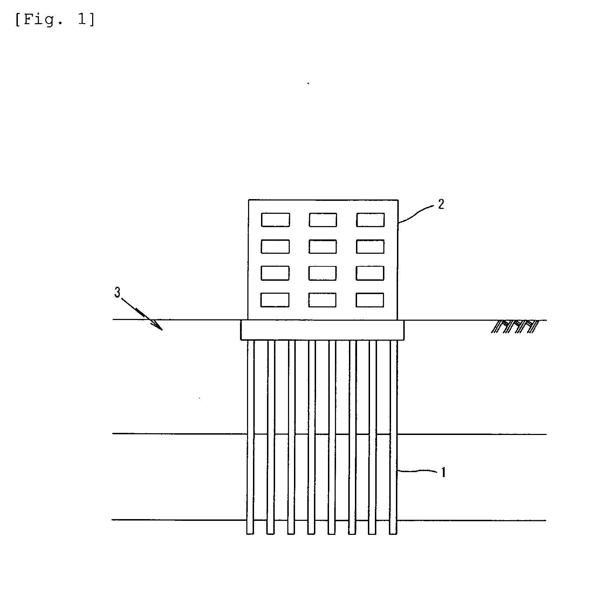

Buildings such as houses and office buildings are built on a foundation that has been constructed on the ground. Fig. 1 shows the image thereof. As shown in Fig. 1, the foundation 1 is of a pile foundation and the building 2 is supported on the ground 3 through the plurality of piles.

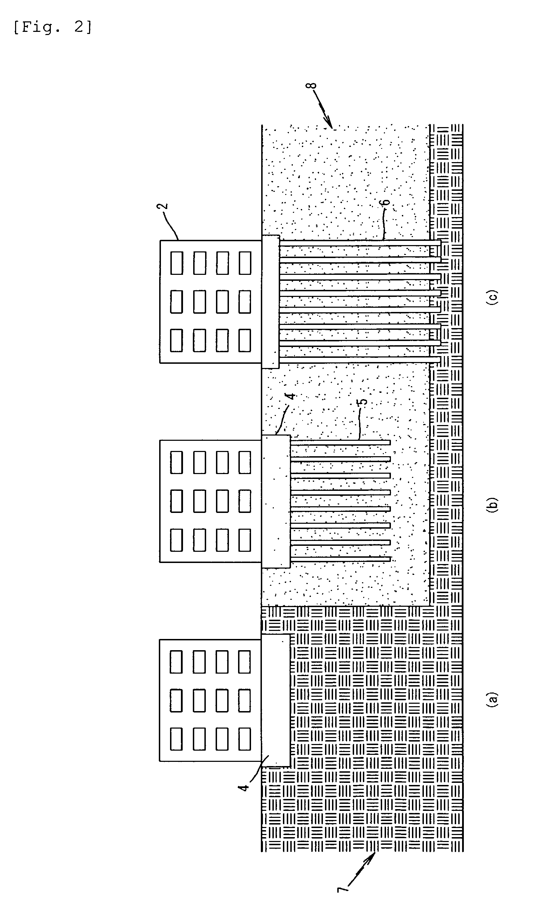

Fig. 2 shows various types of the foundations. As for the foundations constructed on the ground, there may be the spread foundation (raft) 4 shown in Fig. 2(a), the piled-raft foundation shown in Fig. 2 (b) and the bearing pile foundation 6 shown in Fig. 2(c). The spread foundation 4 is constructed by excavating the ground to predetermined depth and then filling concrete thereto to support the load of the building 2. In the piled-raft foundation, both of the raft 4 and the pile foundation 5 are used to support the load of the building 2. In the bearing pile foundation 6, only the piles support the load of the building 2. The spread foundation 4 may be employed in the case where a good quality ground (bearing stratum) with enough a bearing capacity to receive the mass of the upper-structure extends up to about the ground surface. The bearing pile foundation 6 may be employed in the case where the vicinity of ground surface is composed of the weak stratum 8 and the bearing stratum 7 lies under the weak stratum 8. In this case the tips of the piles are driven into the bearing stratum 7 to obtain support of the bearing stratum 7. Further, the bearing pile foundation 6 suffers from a disadvantage that the thicker the thickness of the weak stratum 8, the longer the length of the pile, thereby deteriorating the cost performance. The piled-raft foundation may support the load of the building 2 sufficiently in spite of the weak stratum 8 by using the spread foundation 4 together with the pile foundation 5 to disperse the bearing capacity. Accordingly, the piled-raft foundation may be employed in the case where the cost performance is deteriorated in the bearing pile foundation. Thus the foundation and the ground are essential for supporting the building 2.

Seismic behavior of the upper-structure such as buildings may be evaluated from the result obtained by constructing an analysis model using springs, dampers, beam elements for pillars and beams to realize vibrations and performing numerical analysis based on the constructed analysis model. Also, such evaluation may be performed utilizing the experimental results obtained by conducting a model vibration experiment.

Within the elastic range in which the upper-structure may not be damaged, it may be conducted that all of the response and the input of the system are expressed in the frequency domain and are evaluated. However, when the external force is large, the system reaches to a nonlinear region where the upper-structure may be cracked, yielded up or the like. In this case, the above-mentioned frequency domain fails to express any longer, requiring a sequential evaluation in the time domain. Also, even within the elastic range, the sequential evaluation in the time domain may be applicable at the first.

In order to evaluate the seismic behavior of the upper-structure precisely, it is necessary to express the behavior of the ground-foundation system consisted of the foundation and the ground that supports the upper-structure as an analysis model appropriately. The foundation-ground system is a wave-field extended in three dimensionally, being distinguished from the upper-structure on the ground.

The vibration energy generated on the ground during the earthquake may propagate into the building through the foundation to vibrate the building. The energy inputted to the building may dissipate into the ground through the foundation. In this way, there exists an interaction relationship in which the ground and the building are influenced each other. Accordingly, in general, the seismic dynamical behavior may be expressed as a dynamic spring, namely impedance. In the case where this impedance is used to construct an analysis model and to perform numerical analysis for expressing the foundation-ground system with frequency dependency appropriately, the numerical analysis may be performed using a spring value in a particular frequency approximately, for example the natural frequency of the upper-structure.

For example, the analysis model of whole structure system may be prepared by: calculating the impedance of the foundation-ground system in the frequency domain by using any prediction methods such as thin layered element method; constructing the upper-structure by using beam elements and mass point; connecting the mass, momentum of inertia and the aforementioned impedance for the foundation-ground system. The natural frequency is estimated from mode-analysis of aforementioned analysis model under the elastic behavior of the structure. Then, the dynamic spring value corresponding to the estimated natural frequency is used for the sequential evaluation in the time domain for the sake of approximation (see non-patent literature 1).

Here, the impedance is a complex function with a frequency dependency that reflects the influence to the building given by interaction effects such as a decline of the natural frequency of the building, an increment of damping as well as an induction of rotation, and the impedance may be expressed as follow:

[Equation 1]

$$K = K_R + iK_i$$

$$..(1)$$

The impedance, K, is expressed as the sum of the real part, $K_R$, and the imaginary part, $K_i$. The real part, $K_R$, corresponds to the stiffness of the ground and the imaginary part, $K_i$, to the dissipation damping.

On the other hand, when performing the model vibration experiment to evaluate the seismic dynamical behavior of the foundation-ground system, evaluation may be conducted by: preparing ground into a large-scale shear box just like the real to build a foundation; building the upper-structure thereon; and conducting a vibration experiment to analyze experimental results.

[Non-patent literature 1] Seismic Response Analysis and Design of Buildings Considering Dynamic Ground-Structure Interaction, Second Part: Example Designs Considering the Dynamical Interaction, Architectural Institute of Japan, February 2006.

[Disclosure of Invention]

[Problems to be Solved by the Invention]

When performing the sequential evaluation in the time domain, since the calculation is performed using the spring value of the dynamic spring at the particular frequency for the sake of approximation, the frequency dependency is left out of consideration. Accordingly, the accuracy of the evaluation of the system responses becomes lower remarkably.

Also, as for the model experiment just likes the real in which the foundation and the upper-structure are built at the shear box, it costs huge labors and expenses to have the model prepared. Also due to the limitation of shear box, such model experiment may be incapable of simulating some basic dynamical behaviors such as wave damping.

Furthermore, in such model experiment that targets only the upper-structure and ignores the foundation-ground system, the accuracy of the system responses evaluation may become lower remarkably since the natural frequency and the characteristics of the wave damping are actually different.

In nonlinear analysis involving building failure, time historical response analysis in the time domain may be conducted. In analysis which takes frequency dependency into consideration, the frequency analysis may be performed in the frequency domain. The time historical response analysis is used to calculate responses of each structure member changing in time, namely displacement, velocity as well as acceleration by the analysis using input waveform inputted along with time axis. The frequency analysis may be applied to particular data analysis in which a plurality of variation components is mixed, including the fast Fourier transform method as the most commonly used method. In addition, autoregressive moving average (ARMA) method, which is capable of performing the time historical analysis, may also be used.

However, there never existed any analytic methodologies that are capable of taking account of the aforementioned nonlinear analysis and the aforementioned analysis taking frequency dependency into consideration simultaneously. The ARMA method is capable of performing the time historical analysis and the frequency analysis, however the ARMA is seldom used practically since it is extremely complex scientifically.

Consequently, there is a need to provide an analysis system constructed as a rheology model of a foundation-ground system that is capable of expressing a frequency dependent dynamic spring by using elements with non-frequency-dependent coefficients, and the analysis method based on the analysis model. There is also a need to provide a computer readable program for implementing aforementioned method and a machine device for implementing the aforementioned analysis model on a vibration test apparatus.

[Means for Solving Problem]

As a result of intensive studies made by the present inventor, it has been found that use of a noble machine device, namely a reaction force generation element for generating reaction force proportional to relative acceleration of both ends thereof, to construct a analysis system enables evaluation to have excellent accuracy by performing numerical analysis based on a dynamic model of the analysis model: the aforementioned analysis system is constructed by connecting a base system in which the reaction force generation element, a elastic element such as conventional spring, and a damper element such as damper are connected in parallel, and a core system in which any of two element among these three elements are connected in parallel and remaining element is connected in series.

It has been also found that parallel connection of two or more core system enables the evaluation to have higher accuracy. Further, even in the case where a plurality of cut-off frequencies is exist like a multilayered ground or the case where impedance is varied over the frequency domain like a group pile foundation, it has been also found that modification of connection location of each element in the core system while preserving the base system as it is, permits the evaluation to be actualized. Here, the impedance is the above-mention frequency dependent complex quantity, which consists of the real part and the imaginary part. Furthermore, it has been found that even numerical analysis of the analysis system constructed from only the base system, permits the evaluation of the seismic behavior of the upper-structure supported by the ground through the foundation finely.

That is to say, the aforementioned problems may be solved by the provision of the analysis system, the analysis method, the program and the machine device used in test apparatus according to the present invention.

The analysis system according to the present invention includes an elastic element which is deformed in response to external force and restored when removing the external force; a damper element for damping vibration; and a reaction force generation element for generating reaction force proportional to relative acceleration of both ends thereof.

The analysis system may preferably include a base system in which the elastic element, the damper element and the reaction force generation element are connected in parallel. Also, the analysis system may preferably includes at least one core system in which any of two elements among the elastic element, the damper element and the reaction force generation element are connected in parallel and remaining element is connected thereto in series. And the analysis system may preferably be constructed by connecting the base system and at least one the core system in parallel. Thereby, this setup may result in fine reproduction of dynamic characteristics of a system that includes the foundation and the ground.

The aforementioned core system may be provided with the elastic element and the damper element connected in parallel and the reaction force generation element connected thereto in series. It is useful for the case where a plurality of cut-off frequencies is existed like a multilayered ground. Connecting of a plurality of the core systems in parallel enables the accuracy to be improved.

The core system may also be provided with the damper element and the reaction force generation element connected in parallel and the elastic element connected thereto in series. It is useful for the case of dynamic impedance of the ground connected with a foundation having embedment and for the case where impedance is varied over the frequency domain like the group foundation. Parallel connection of a plurality of the core systems enables the accuracy to be improved.

If necessary, the analysis system may be constructed by using both of the core system in which the elastic element and the damper element are connected in parallel and the reaction force generation element is connected in series; and the core system in which the damper element and the reaction force generation element are connected in parallel and the elastic element is connected in series.

The aforementioned elastic element may be a spring or a rubber, the aforementioned damper element may be a damper. The aforementioned reaction force generation element may include a disk-shaped rotation mass body supported rotatably at rotation axis, and a plate-shaped or bar-shaped element adjacent to the circumference part of the rotation mass body. Also, the reaction force generation element may be composed of one which equipped with a plurality of the rotation mass bodies and a plurality of gears having different number of teeth, each of the plurality of rotation mass bodies being connected to each of the plurality of gears having different number of teeth; and aforementioned plate-shaped or bar-shaped member. In this way, equipment of the gears with different numbers of teeth allows desired rotational mass to be ensured in space-saving manner. And use of multiplying gears enables the desired rotational mass to be tuned.

Further according to the present invention, there may be provided a method of operating a computer to generate an analysis model by combining a plurality of elements and to perform numerical analysis based on the analysis model for evaluating seismic behavior of an upper-structure supported by the ground through a foundation. The analysis method may cause the computer to execute the steps of: retrieving each element data from a data storage part to generate a dynamic model of a base system, wherein each of the element data is used for modeling an elastic element that is deformed in response to external force while being restored when removing the external force, a damper element for damping vibration, and a reaction force generation element for generating reaction force proportional to relative acceleration of both ends thereof, these elements organizes the analysis model of a system including the foundation and the ground, and base system is provided with the elastic element, the damper element and the reaction force generation element connected in parallel; and performing the seismic response analysis with frequency dependency by using an elastic coefficient for the elastic element, an damping coefficient for the damper element, and a mass for the reaction force generation element inputted for the dynamic model.

The method according to the present invention may include the steps of: selecting any of two elements among the elastic element, the damper element and the reaction force generation element to connect them in parallel and to connect remaining element thereto in series, generating a dynamic model of at least one core system, by using each element data based on inputted information about the ground and the foundation; and; and generating the analysis model in which the dynamic model of the base system and the dynamic model of the at least one core system are connected in parallel. In the aforementioned step of performing, the seismic response analysis may be performed using the elastic coefficient, the damping coefficient and the mass inputted for the dynamic model.

The information about the ground and the foundation may include any of foundation shapes, foundation types, an elastic coefficient of the ground, a damping coefficient of the ground, layer thickness of the ground, Poisson's ratio of the ground, depth of embedment, and information indicating that the ground is multilayered ground.

Some of the shapes of foundation may include round shape and square shape, and some of the types of the foundation may include group pile foundation, spread foundation, caisson foundation and steel pipe sheet piles foundation.

Also, according the present invention, there may be provided a computer readable program for implementing the aforementioned method. Further according to the present invention, there may be provided a machine device for implementing the aforementioned method, which is used in a test apparatus for evaluating seismic behavior and attached to lower part of a test structure or to a side of a test pile body.

[Technical Advantage of the Invention]

Provision of the analysis system that is capable of expressing a frequency dependent dynamic spring enables the dynamic impedance to be integrated into the numerical analysis. Since the model may be constructed from each actual element, it is possible to integrate into the actual test apparatus as the machine devise to implement the analysis model.

Although the frequency dependency of the foundation-ground system may cause a non-negligible difference to the degrees of the upper-structure's failure in design: however, it is capable of performing dynamical analysis which takes account of such structure element with failure and the frequency dependent foundation-ground system simultaneously.

[Brief Description of the Drawings]

Fig. 1 illustrates the image of the foundation-ground-superstructure system.
Fig. 2 illustrates the images of some types of foundations.
Fig. 3 shows the relationships between the non-dimensional frequency $a_0$ and the reactance of the impedance function ($K_d/4K_s$) in the group pile foundation.
Fig. 4 illustrates the analysis system of the present invention.
Fig. 5 shows the setup of the base system.
Fig. 6 shows the setups of the core system.
Fig. 7 shows examples of the reaction force generation element.
Fig. 8 illustrates the machine device for actualizing the analysis model, which is used in the test apparatus.
Fig. 9 depicts the reinforced concrete structure.
Fig. 10 shows the relationships between the non-dimensional frequency $a_0$ and the non-dimensional impedance ($K_d/4K_s$).
Fig. 11 shows the relationship between the frequency and values of the real part and the imaginary part of the dynamic impedance (kN/m).
Fig. 12 illustrates the structural analysis model of whole system.
Fig. 13 shows the results of the time historical response analysis performed using the Newmark-$\beta$(beta) method.
Fig. 14 shows the relationships between the non-dimensional frequency $a_0$ and the non-dimensional impedance ($KH^3/E_pI$).
Fig. 15 shows the relationships between the non-dimensional frequency $a_0$ and the non-dimensional impedance ($K_d/4K_s$).
Fig. 16 shows the relationships between the non-dimensional frequency $a_0$ and the non-dimensional impedance ($K_d/4K_s$).
Fig. 17 shows the relationships between the non-dimensional frequency $a_0$ and the non-dimensional impedance.
Fig. 18 shows the first embodiment of the test apparatus equipped with the machine device.

Fig. 19 shows the second embodiment of the test apparatus equipped with the machine device.

Fig. 20 shows the third embodiment of the test apparatus equipped with the machine device.

Fig. 21 shows the relationships between the non-dimensional frequency $a_0$ and the non-dimensional impedance $(K_d/4K_s)$

[Explanation of Numerals]

1-- foundation; 2-- building; 3-- ground; 4-- spread (raft) foundation; 5-- pile foundation; 6-- bearing pile foundation; 7-- bearing stratum; 8-- week stratum; 10, 10a, 10b, 10c-- elastic element; 11, 12-- node; 20, 20a, 20b, 20c-- damper element; 30, 30a, 30b, 30c-- reaction force generation element; 40-- base system; 41,42-- node; 50-- core system; 51, 52, 53-- node; 60-- core system; 61, 62, 63-- node; 70-- connection end; 71-- connection element; 72-- rotation mass body; 73-- bar element; 80-- upper plate; 81-- spring; 82-- damper; 83-- rotation mass body; 84-- rotational inertia force transmission plate; 85-- slider; 86-- slider surface; 87-- slider board; 88-- rotation mass body; 89-- spring; 90-- damper; 91-- bridge pier; 92-- girder; 83-- pile; 94-- ground; 120-- ground; 121-- footing; 121-- superstructure; 123-- analysis system; 180-- support plate; 181-- sample structure; 182- connection plate; 183-- machine device; 190-- rotating hinge; 200-- slide wall; 201-- reaction wall; 202-- machine device.

[Best Mode for Carrying Out the Invention]

To conduct seismic response analysis of an upper-structure such as a building, it is necessary to define relationship between seismic force and deformation (Restoring Force Characteristics) indicating what behavior is given when the upper-structure is subjected to the seismic force. In order to evaluate the seismic behavior of the upper-structure precisely, it is necessary to express the behavior of the foundation and the ground on which the upper-structure is supported, appropriately. The analysis system according to the present invention is a system for reproducing dynamic characteristics such as the restoring force characteristics of the foundation-ground system consisting of the foundation and the ground. Furthermore, the analysis system of the present invention is a system being capable of expressing frequency-dependent impedance that ever exited in the past. Provision of such frequency-dependent system permits to realize a seismic response analysis in the nonlinear region where the building failure may occur.

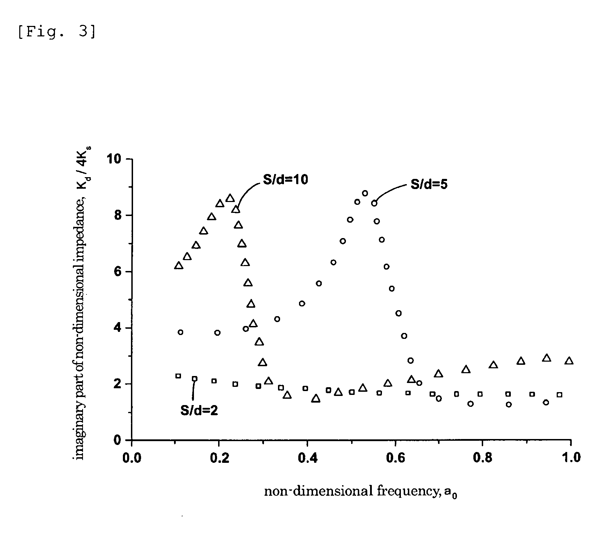

Before explaining the analysis system according to the present invention, frequency dependency of dynamic impedance may be explained. Hereunder, since the term "static spring (static impedance)" may be also used herein, the impedance is referred as "dynamic impedance" for the sake of distinction. Fig. 3 shows the relationship between the non-dimensional frequency $a_0$ and the non-dimensional value $(K_d/4 K_s)$ which is standardized by dividing the spring value of the imaginary part of the dynamic impedance, $K_d$, by the spring value of the static spring (static impedance), $K_s$, in a group pile foundation consisting of a plurality of piles. The horizontal axis represents the non-dimensional frequency and the vertical axis represents the non-dimensional impedance. The non-dimensional frequency $a_0$ may be obtained by multiplying the representative size of cylindrical foundation (pile diameter as for piles), 'a', and the angular frequency of the vibration input, m, together and by dividing it by elastic shear wave velocity at the ground surface, $c_s$. Further explaining the group pile foundation, the group pile foundation is a foundation that is formed from the plurality of the piles driven to the ground adjacent to each other so as to cause a certain phenomena in which within some limit range of the pile interval the piles act as a single group to cause a difference in bearing capacity and characteristics of deformation from a single pile. The S/d shown in Fig. 3 represents the ratio of interval between piles (m) and diameter of piles (m). The spring value of the elastic impedance at which the frequency converges to zero may be used. As shown in Fig. 3, the non-dimensional impedance is changed along with the non-dimensional frequency, indicating that the dynamic impedance depends on the frequency.

Conventional analysis models such as Voigt model, which use an elastic element such as a spring and a damper element such as a damper, fail to express the frequency-dependent dynamic impedance satisfactory. Here, the elastic element is deformed in response to applied external force and is restored when removing the external force, and the damper element damps the vibration. According to the present invention, it is found that introduction of a novel machine element enables the system to express the frequency-dependent dynamic impedance excellently. The novel machine element is a reaction force generation element that generates reaction force proportional to relative acceleration of the both ends thereof.

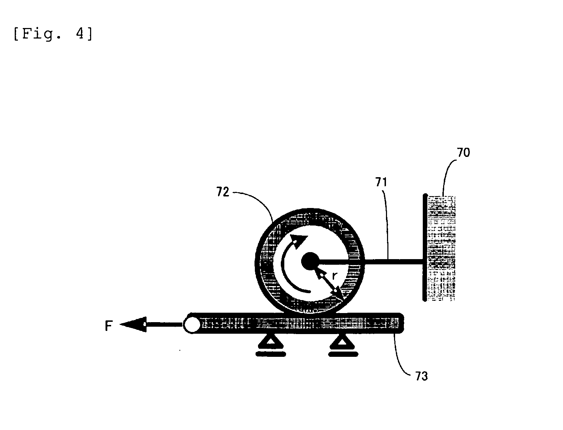

The reaction force generation element may be composed of the connection element 71, the rotation mass body 72 and the bar element 73 as shown in Fig. 4, for example. The connection element 71 has one end connected to one connection end 70 and other end equipped with rotation axis a which the rotation mass body 72 is supported rotatably. The bar element 73 is connected to the other connection part not shown in the figure and is adjacent to the circumference part of the rotation mass body 72.

Here, the mechanism of generating the reaction force in the reaction force generation element shown in Fig. 4 will be described in detail. As shown in Fig. 4, applying polar coordinates system to the rotation mass body 72, the circumference part may be represented by the coordinates (r, θ) with regarding the center of the rotation mass body 72 as origin. When vibration is applied from outside due to seismic ground motion to vibrate the connection end 70, the rotation mass body 72 rotates therewith. When the rotation mass body 72 undergoes rotational movement, rotational moment of inertia J expressed as the following equation (2), may be generated. The rotational momentum of inertia J is physical quantity indicating a measure of rotation element's resistance to rotate.

[Equation 2]

$$J = m \times r^2$$

(2)

The m represents the mass and r represents the radius of the rotation mass body 72. The rotation mass body 72 generates a rotational moment, N, proportional to the rotational moment of inertia, J, as defined above due to its rotation. The rotational moment, N, is expressed as the following equation (3).

[Equation 3]

$$N = J \times \omega$$

(3)

The m in the equation (3) represents the rotational angular acceleration of the rotation mass body 72. Since the rotation mass body 72 is adjacent to the bar element 73, the rotational moment, N, transmits to the bar element 73 to generate force, F, expressed as following equation (4).

[Equation 4]

$$F = m \times u''$$

(4)

The u double prime represents relative acceleration of the bar element 73 with respect to the rotational center of the rotation mass body 72. Consequently, the reaction force generation element generates the reaction force F proportional to the aforementioned relative acceleration, u double prime.

Furthermore, the reaction force generation element may be provided with a plurality of rotation mass bodies 72 and a plurality of gears having different numbers of teeth. In this case, each of the rotation mass bodies may be connected to each of the gears having different numbers of teeth in series. In this way, by combining the gears with different numbers of teeth, namely multiplying gears varied their gear ratio, the torque of the rotation mass body 72 may be increased so that desired rotational moment of inertia is ensured in the space-saving manner. Furthermore, use of the multiple gear allows us to adjust to desired the rotation mass. The bar element 73 may include a rod, and in addition to the bar element a plate element such as a slide board may also be employed. In order to transmit the generated reaction force, a slider for making the aforementioned bar element or plate element movable may be provided with. The slider may be provided with a roller for example. In addition, the reaction force generation element may be a structure combining a rack which is a straight bar or plate engraved teeth on the surface, and a pinion which is a round-shaped small gear.

In the present invention, in order to express the frequency-dependent dynamic impedance finely, this reaction force generation element is used to construct the analysis system with the elastic element and the damper element in combination.

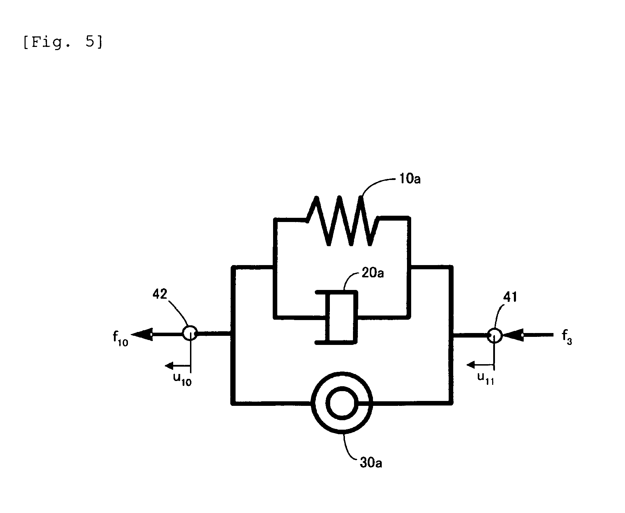

The analysis system includes the base system in which the elastic element 10a, the damper element 20a and the reaction force generation element 30a are mutually connected in parallel as shown in Fig. 5. The base system is a fundamental system of the analysis system and is essential for the analysis system according to the present invention. Here, $u_{10}$ and $u_{11}$ represent absolute displacements of the nodes, and $f_3$ and $f_{10}$ represent the nodal forces. In the base system, the nodal force $f_3$ is applied to the node 41 to be the absolute displacement $u_{10}$ at the node 41, and the nodal force $f_{10}$ is applied to the node 42 to be the absolute displacement $u_{11}$ at the node 42. The absolute displacement is actual displacement expressed by x + y when the ground is deformed by y while the displacement (relative displacement) of the node with respect to the ground being x.

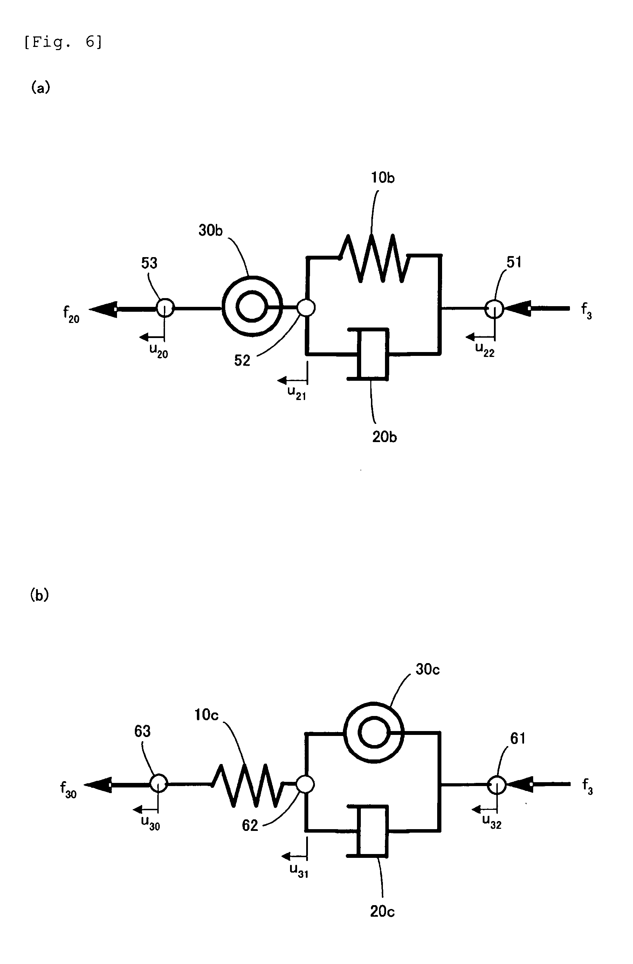

Also, the analysis system includes the core system in which any two of elements selected among the elastic element 10, the damper element 20 and the reaction force generation element 30 are connected in parallel, and the remaining one is connected thereto in series as shown in Fig. 6(a), (b). The core system is a core of the analysis system. Modification of the setup inside the core system permits to express various frequency dependencies. In Fig. 6 (a), the elastic element 10b and the damper element 20b are connected in parallel and the reaction force generation element 30b is connected thereto in series to construct the core system. Furthermore, in Fig. 6 (a), there exists three nodes 51, 52 and 53 and the nodal forces $f_3$ and $f_{20}$ are applied to the node 51 and 53 to be the absolute displacement $u_{20}$, $u_{21}$ and $u_{22}$ at nodes 51, 52 and 53, respectively. On the other hand, in Fig. 6 (b), the damper element 20c and the reaction force generation element 30c are connected in parallel and the elastic element 10c is connected thereto in series to construct the core system. Also, in Fig. 6 (b), there exists three nodes 61, 62 and 63, and nodal forces $f_3$ and $f_{30}$ are applied to the nodes 61 and 63 to be the absolute displacement $u_{30}$, $u_{31}$ and $u_{32}$, at the nodes 61, 62 and 63, respectively.

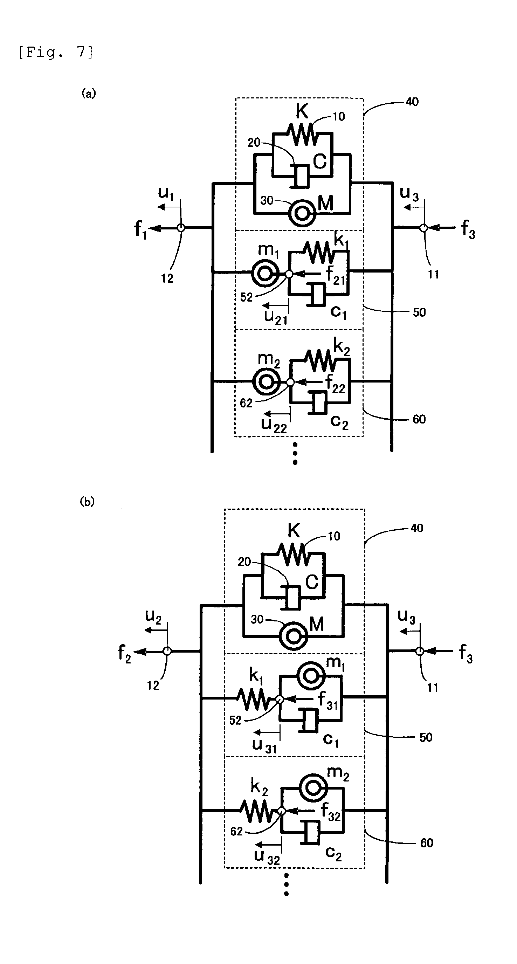

Consequently, the analysis system of the foundation-ground system may be configured as shown in Fig. 7. Fig. 7 (a) and (b) shows the embodiments of the analysis system according to the present invention. The analysis system shown in Fig. 7 (a) may be employed as a model preferable for seismic response analysis in the case where a plurality of cut-off frequencies exists, like a foundation embedded in the multi-layered ground having different ground layer and the like. Here, the cut-off frequency is a specific frequency below which wave dissipation effect from the foundation decreases rapidly. The analysis system shown in Fig. 7 (b) may be employed as a model preferable for seismic response analysis in the case where impedance varies over the frequency domain.

The analysis system according to the present invention is constructed by connecting the base system 40, the core system 50 and the core system 60 in parallel. Fig. 7 (a) and (b) shows the plurality of identical core systems connected in parallel. In this way, connection of a plurality of identical core system in parallel enables the accuracy of analysis to be improved. Although parallel connection of the identical core systems has been explained here; however, in order to express a dynamic spring of the foundation-ground system finely, the core system shown in Fig. 7 (a) and the core system show in Fig. 7(b) may be used together if necessary.

When the seismic response analysis based on the constructed analysis system is conducted, and the elastic element is a spring, the elastic element may be used as a machine element for expressing static impedance, and the spring value (spring coefficient) of the static impedance may be used. As for the damper element, since it is a machine for element expressing the whole damping, the damping coefficient is used. As for the reaction force generation element, since it is a machine element for generating the reaction force proportional to the relative acceleration of the both ends thereof, and the reaction force depends on the mass of the mass body of the reaction force generation element, the mass of the mass body is used. Also, the analysis system may be constructed as a model which takes nonlinearity of the foundation-ground system itself during the strong seismic motion into consideration by considering, for example, the historical characteristics and the stiffness degradation for a single element or a plurality of elements among the components thereof.

In the Fig. 7, the elastic coefficient of K is given for the elastic element 10 of the base system 40, the damping coefficient of C is given for the damper element 20, and the mass of M is given for the reaction force generation element. Also, the elastic coefficients of $k_1$ and $k_2$ are given for each elastic element, the damping coefficients of $c_1$ and $c_2$ are given for each damper element and the mass of $m_1$ and $m_2$ are given for each reaction force generation element for two core systems 50 and 60, respectively.

When the nodal force $f_3$ is applied to the node 11 of the analysis system shown in Fig. 7 (a), the nodal force $f_3$ affects the base system 40, the core system 50 and the core system 60 to be shared by each system. In the base system 40, the resultant reaction force originated from the elastic element, the damper element and the reaction force generation element is applied to the node 42. On the other hand, in the core system 50, the resultant reaction force originated from the elastic element and the damper element is applied to the node 52, and this force is applied to further the reaction force generation element so that the reaction force originated from the reaction force generation element is applied to the node 53. Similarly, in the core system 60, the resultant reaction force originated from the elastic element and the damper element is applied to the node 62 and this force is applied to the reaction force generation element so that the reaction force generation element apply the reaction force on the node 63. Composing the reaction forces on each node 42, 53, 63 of the base system 40 and the core systems 40, 60, the resultant force is balanced with the nodal force $f_1$ at the node 12 of the analysis system.

Any commonly available spring or rubber and damper may be used for the elastic element and the damper element, respectively. Some of the springs may include a leaf spring and a coil spring. Some of the rubbers may include a laminated rubber. Some of the dampers may include a steel damper utilizing plastic deformation of steel, a friction damper utilizing friction between two solid surfaces, an oil damper utilizing viscous resistance of oil, a viscous damper utilizing shear resistance of high viscous material, as well as a magneto-rheological (MR) damper utilizing MR fluid.

Next, an analysis process for generating the analysis model as a virtual model and conducting a seismic response analysis based on the virtual model by a computer will be described. The present analysis process may be implemented by executing the program configured as a computer readable program. As for the process flow, the computer executes the aforementioned program to generate a dynamic model of the base system. The dynamic model in this case is a virtual model and may be generated by using elastic element data for modeling the elastic element, damper element data for modeling the damper element and reaction force element data for modeling the reaction force generation element, which organize the analysis model. These data are used for modeling the elastic element, the damper element and the reaction force generation element in three dimensions. These modeled elements are connected to each other in parallel by any wires and the like to generate the dynamic model of the base system. These data are stored in the data storage part such as HDD equipped with the computer and are subjected to readout in response to data readout requests. The stored data, in the case of the pile foundation, includes material properties such as Young's modulus, area of cross-section, second moment of area of pile and the like. These data are also used for the analysis.

Similarly, a dynamic model of core system is generated. Any two of elements are selected among the aforementioned three elements to connect them each other in parallel and to connect the remaining one thereto in series to construct the core system. Choice of two elements may be determined on the basis of information about foundation and ground.

For example, in the case of a foundation embedded in a multi-layered ground with different ground layers and the like, since there exist a plurality of cut-off frequencies, a system in which elastic element and damper element are connected in parallel and reaction force generation element is connected thereto in series may reproduce excellently. So, such system may be a preferable core system for this case. Hence, system is configured so as to generate the dynamic model of the core system having such configuration when the information indicating the foundation embedded in the multi-layered ground is inputted. Accordingly, the computer generates the dynamic model of the core system having such configuration in response to the input of such information.

In a foundation with embedment as well as a group pile foundation, dynamic impedance of ground connected thereto and impedance over the frequency domain may be varied. In such cases, a system in which the damper element and the reaction force generation element are connected in parallel and the elastic element is connected thereto in series may reproduce excellently. So, such system may be a preferable core system for these cases. Hence, system is configured so as to generate the dynamic model of the core system having such configuration when the information indicating such ground is inputted. Accordingly, the computer generates the dynamic model of the core system having such configuration in response to the input of such information.

The information about the foundation and ground may include, in addition to the information indicating the aforementioned multi-layered ground, the aforementioned group pile foundation or the aforementioned foundation with embedment, depth of embedment, shape of foundation such as round shape or square shape, type of foundation such as spread foundation, caisson foundation or steel pipe sheet piles foundation, as well as various numerical values of the ground such as an elastic coefficient of the ground, an damping coefficient of the ground, layer thickness of the ground, Poisson's ratio of the ground. The core systems with appropriate configuration may be generated by the information. Further, the configuration of the core system generated by the information may be stored in relation to the most appropriate model that is determined by performing numerical analysis in advance such that an appropriate core system may be generated on the basis the information.

The configuration of the core system is not limited to the aforementioned configurations and these different core systems may be used together if necessary. After the dynamic model of the core system being generated, the dynamic model of the base system and the dynamic model of the core system are connected in parallel to generate the analysis model. At that time, any known theoretical solutions or any impedance characteristics (target values) calculated separately by using any known conventional discretization methods and impedance characteristics obtained from the aforementioned analysis model are compared so as to verify that the analysis model reproduces the characteristics with fine accuracy and to adjust the aforementioned various numerical values of the system. In this way, the analysis model of the foundation-ground system has been generated.

After constructing the analysis model, various parameters are set up on the analysis model to perform the seismic response analysis. The parameters may include the elastic coefficient for the elastic element, the damping coefficient for the damper element, the mass for the reaction force generation element, frequency of the seismic wave and the like. These parameters may be set up by user input. Since the seismic response analysis is a numerical analysis and such simple analysis model according to the present invention as described above is capable of reproducing, the numerical analysis based on the analysis method may be performed using any simple analytical algorithms such as time-domain analysis method (step-by-step integration scheme). For example, Newmark-$\beta$ (beta) method may be employed for the time historical response analysis. The Newmark-$\beta$ method is a well-known step-by-step integration scheme in which equations of motion of multi-degrees of freedom with mass, damping coefficient and elastic coefficient as parameters are integrated sequentially to obtain a response time historical waveform. The Newmark-$\beta$. method is a method for obtaining the exact solution at time, $t + \Delta t$, based on the solution of the exact solution at time, $t$, if obtained.

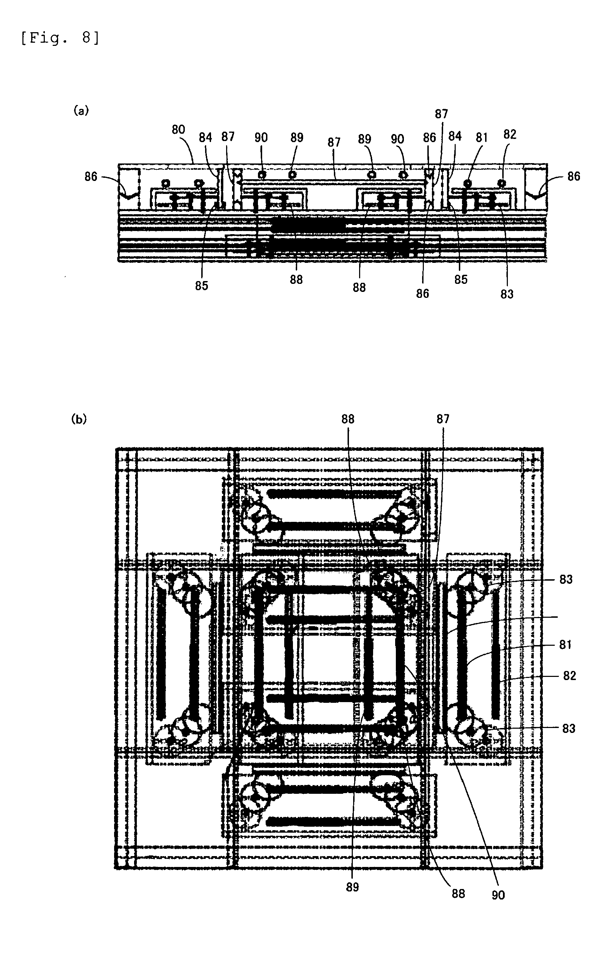

According to the present invention, a machine device integrated into a test apparatus for vibration experiment to implement the aforementioned analysis model may be provided. Fig. 8 shows the one embodiment of the machine device. Fig. 8 (a) shows the cross sectional view and Fig. 8 (b) shows the plane view where an upper plate has been removed. In the embodiment shown in Fig. 8, another one machine device is stacked onto the one machine device so as to be capable of simulating impedance characteristics in two axes direction. For this purpose, the springs and the dampers are shown to cross each other.

Similarly to the aforementioned analysis system, the setup of the machine device is composed of the base system and core system. In Fig. 8, the machine device has the upper plate 80 for placing the upper-structure thereon as shown in Fig. 8 (a) . The upper plate 80 corresponds to the free node $u_1$ shown in Fig. 7 (a). Also the machine device is provided with a base system which includes the spring 81, the damper 82, the rotation mass body 83 having three gears with different number of teeth, the rotational inertia force transmission plate 84 connected to the upper part 80 adjacent to the circumference of the rotation mass body 83 and the slider 85 for making the rotational inertia force transmission plate 84 be slideable. Here, a reaction force generation member is constructed from two pairs of the rotation mass bodies 83, the rotational inertia force transmission plate 84 and slider 85 as the reaction force generation element. Also, the rotation mass body 83 is structured so that a multiplying gears and a rotating mass body are connected in series. In the base system, each of the spring 81, the damper 82 and the reaction force generation member transmits vibration to the upper plate 80.

The machine device is provided with further a core system which includes the slider board 87 sliding through slider surface 86, the rotation mass body 88 provided with three gears having different numbers of teeth and having a circumference adjacent to the slider board 87, and the spring 89 and the damper 90 attached to the slider board 87. Here, a reaction force generation member is composed of the slider board 87 and the rotation mass body 88. And the rotation mass body 88 has similar structure to the rotation mass body 83. Also, the slider board 87 is made of three plated materials combined as one and corresponds to the free node $u_{21}$ shown in Fig. 7 (a). In the core system, the spring 89 and the damper 90 are placed on the same slider board 87 so that the spring 89 and the damper 90 are connected in parallel.

In the embodiment shown in Fig. 8, the core system is constructed so that an elastic member as the elastic element and a damper member as the damper element are connected in parallel and the reaction force generation member is connected thereto in series as shown in Fig. 7 (a), and two pairs of the machine devices composed of the base system and the core system are equipped. In the Fig. 8, the device is organized for simulating impedance characteristics in two axial directions; however, when simulating the impedance characteristic in one axial direction, only one machine device may be used.

Only one core system being connected in the Fig. 8, however when two or more core systems are to be connected, the core systems may be added to the longitudinal direction of the springs 81, 89 and the dampers 82, 90 for example. Also, when the core system shown in Fig. 7 (b) is employed, the damper 90 may be inserted between the two pairs of the machine devices and only the spring 89 may be placed on the slide board 87 such that the damper 90 and the reaction force generation member are connected in parallel and the spring 89 is connected thereto in series.

The reaction force generation members of the base system and the core system generates the reaction force F proportional to the relative acceleration, u double prime, with respect to the rotational center of the rotation mass bodies 83, 88 as expressed in the aforementioned equation (4). So, the reaction force generation members may be composed of an acceleration sensor for sensing the relative acceleration with respect to the rotational center of these rotation mass bodies 83,88, a motor for generating the force F in response to the relative acceleration, a controller circuit for controlling the motor driving in addition the rotation mass bodies 83, 88. In this way, by sensing the relative acceleration and controlling the motor driving by the controller circuit, the predetermined torque depending thereon may be generated simply, thereby allowing reproduction of the function as the reaction force generation member excellently.

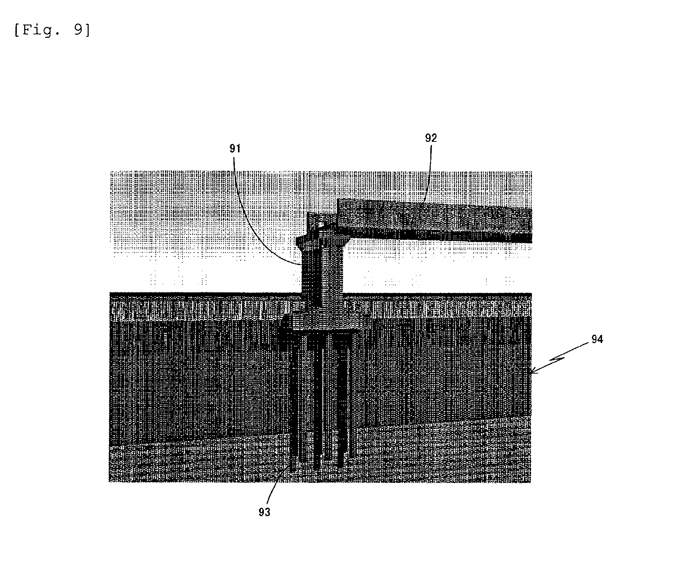

Here, the resulted comparative study of responses with respect to conventional method, by performing structure analysis under following conditions by means of the modeled system shown in Fig. 7 as the analysis system of the foundation-ground system will be described. In the conventional method, the spring coefficient and damping coefficient were assumed to be constant since the conventional method is incapable of taking frequency dependency of impedance into consideration. The reinforced concrete structure shown in Fig. 9 was used as the target of the analysis. The reinforced concrete was composed of the multi-line RC wall type bridge piers 91, the PRC simple 3 main I-girder 92 placed on the upper part thereof, and the rubber bearing placed between the bridge piers 91 and the girder 92 (not depicted in the figure) for dispersing seismic inertia force, and was provided with the pile foundation composed of the plurality of the piles 93 placed thereunder. The reinforced concrete structure was supported on the ground 94 through the pile foundation.

The piles 93 were setup to be cast-in-place piles with diameter of 1 m constructed by all casing method. Analytically, the bending deformation of the body was assumed to be surpassed, and the ground 94 was assumed to be uniform ground. The mass of the concrete structure, $m_s$, was set to 50 ton, and the mass of the footing, $m_f$, was set to 200 ton. The initial stiffness (elastic coefficient) of the bridge piers, $k_s$, was set to 200000 kN/m, the damping coefficient, $c_s$, was set to 400 kN-sec/m, the yield displacement of the bridge piers was set to 0.02 m, the ratio of second order gradient after the bridge piers being yielded, $\alpha$. (alpha), was set to 0.1, and the Clough model, which is used for modeling non-linear historical characteristics of the RC concrete after the bridge piers being yielded was employed. Yield displacement is certain displacement at yield point where the loading over the elastic limit has been applied.

The analysis was conducted under different ratios between the pile interval and the pile diameter, S/d, that was set to 2, 5 and 10. The static stiffness (static elastic coefficient) of the group foundation, $K_s$, was set to 100,000 kN/m. For the base system, the elastic constant of the elastic element, K, was set to 240,000 kN/m, the damping coefficient of the damper element, C, was set to 864 kN-sec/m, the mass of the reaction force generation element, M, was set to 124.8 ton. And two core systems connected in parallel was employed. For first core system, the elastic coefficient of the elastic element, $k_1$, was set to 225,600 kN/m, the damping coefficient of the damper element, $c_1$, was set to 18,048 kN-sec/m, and the mass of the reaction force generation element, $m_1$, was set to 721.9 ton. For second core system, the elastic coefficient of the elastic element, $k_2$, was set to 240,000 kN/m, the damping coefficient of the damper element, $c_2$, was set to 2,880 kN-sec/m, and the mass of the reaction force generation element, $m_2$, was set to 91.2 ton. Kobe-NS wave of 1995 South Hyogo Prefecture Earthquake was used as input seismic motion.

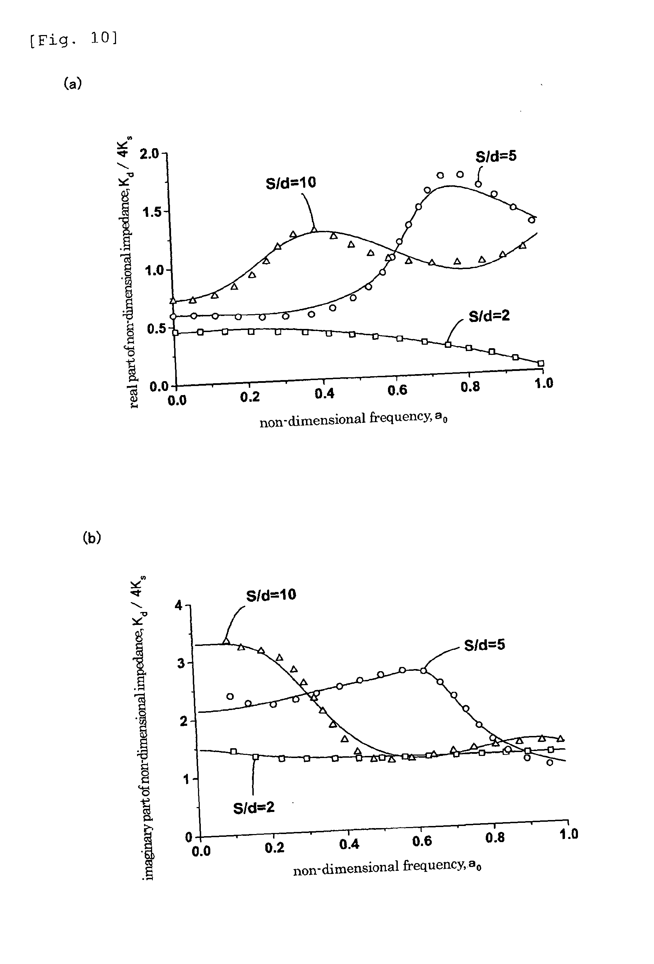

As a result of the analysis, Fig. 10 shows the relationship between the non-dimensional frequency, $a_0$, and the non-dimensional impedance, $K_d/4K_s$. $K_d$ represents dynamic elastic coefficient, namely dynamic spring coefficient. Fig. 10 (a) shows the relationship between $a_0$ and the real part of the non-dimensional impedance, and Fig. 10 (b) shows the relationship between $a_0$ and the imaginary part of the non-dimensional impedance. Here, as for the impedance characteristics, the exact solution was calculated by using a prediction method, which has been proposed by Kaynia and Kausel (Kaynia, A., and Kausel, E., "Dynamic stiffness and seismic response of pile groups" Research Report, R82-03, Dept. of Civil Engrg., MIT, Cambridge, Mass. (1982)) and is well-recognized to be capable of evaluating the impedance with most fine accuracy since the past. And the real part and imaginary part values of the non-dimensional frequency $a_0$ are shown as square, circle and triangle for S/d of 2, 5 and 10, respectively. As described in Fig. 10 (a) and (b) by solid lines, the resulted values of the real part and imaginary part of the non-dimensional frequency $a_0$ obtained on the basis of the analysis model that models the analysis system of the present invention were found to approximate to the exact solutions.

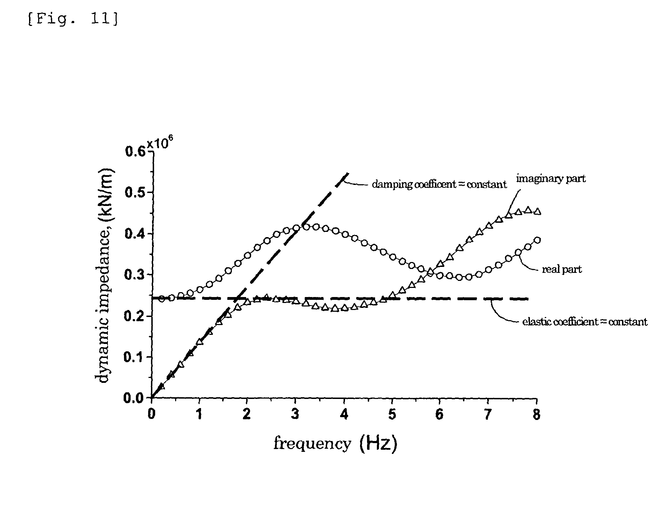

Next, Fig. 11 shows the relationships between the frequency (Hz) and the values of the real part and the imaginary part of the dynamic impedance (kN/m). For the sake of comparison, the result of the conventional model that does not takes the frequency dependent of the impedance into account, is also shown concurrently. Also, the resulted values of the real part and imaginary part of the impedance with regard to the frequency obtained by using the Newmark-$\beta$ method (Linear Acceleration Method with setting $\beta$=1/6) are also shown concurrently. As for the Newmark-$\beta$ method, circle and triangle represents the resulted real part and imaginary part, respectively. The solid line represents the values of the real part and imaginary part obtained by expanding the analysis model in the frequency domain.

As shown in Fig. 11, the results calculated on the basis of the analysis model approximately coincide with the exact solution obtained by using Newmark-$\beta$ method. On the other hand, the result calculated on the basis of the conventional model in which the frequency dependency was not considered, are greatly different from the results calculated on the basis of the analysis model: because the static elastic coefficient was constant to be 240,000 kN/m, the damping coefficient was constant to be 21,800 kN-sec/m since the elastic coefficient and damping coefficient need to assume as constant in the conventional model, thereby not allowing the frequency dependent result to be obtained.

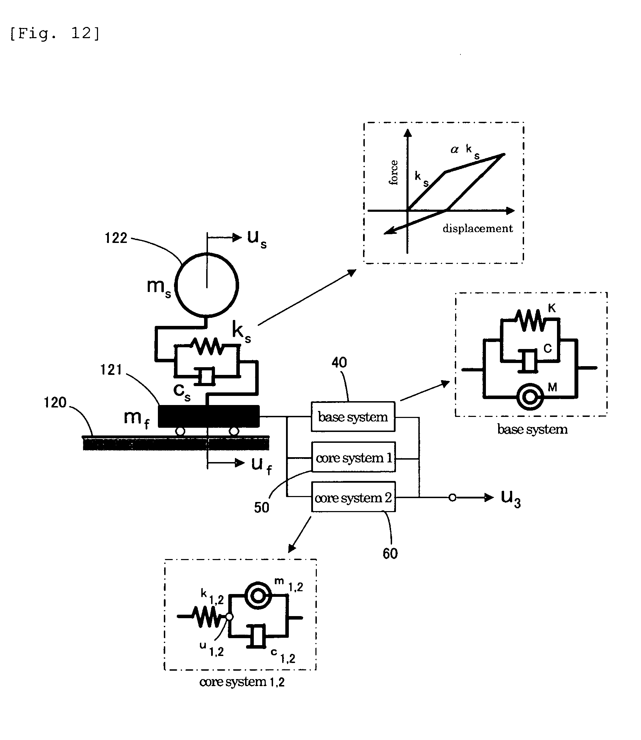

As described hereinbefore, the foundation and ground system has been evaluated, however, when analyzing whole bridge piers for evaluating the structural analysis model of the whole system, any known sway model may be employed as a model in which springs of the foundation are collected at the lower end of the bridge piers column and at lower end of the bridge piers wall, to construct the model as shown in Fig. 12. Sway rocking (SR) model considering the rotational motion of the foundation may be used in general: however, here the sway model considering only the lateral motion of the foundation is employed for the sake of analytical simplicity. The modeling shown in Fig. 12 models a setup in which the footing 121 provided on the ground 120 as a foundation and the upper-structure 122 are connected by a nonlinear system (Clough model) provided with an elastic element and a damper element connected in parallel, and the analysis system 123 is connected to the footing 121. The Clough model is a model having nonlinear characteristics in which the force increases at the rate of the spring coefficient, $k_s$, and increases at the rate of $\alpha k_s$ above the yield displacement as indicated by allow.

In the analysis system, the base system has the setup shown in Fig. 12 or Fig. 5, and the core system has the setup provided with the damper element and the reaction force generation element connected in parallel, and the elastic element connected thereto in series as shown in Fig. 12 or Fig. 6 (b). Here, two core systems are connected in parallel. In Fig. 12, $m_s$ represents the mass of the upper-structure and $m_f$ represents the mass of the footing 121. And $u_s$ and $u_f$ represent the displacements thereof, respectively, and $u_3$ represents the displacement outputted from the analysis system.

When performing the structure analysis, the consideration about the rotational direction of foundation may required: however, such consideration may be omitted because the stiffness of the group pile foundation is high. Also, because a plastic hinge is caused at the base part of the bridge piers due to its damages, the upper-structure may be modeled as a single degree of freedom system. Here, the plastic hinge is a dynamical state of the cross section having full-plastic moment in case of a steel material, for example, where the beam subjected to bending undergoes loading over elastic limit to enter the plastic region so that rotation around axis continues at constant bending moment, as it were hinge.

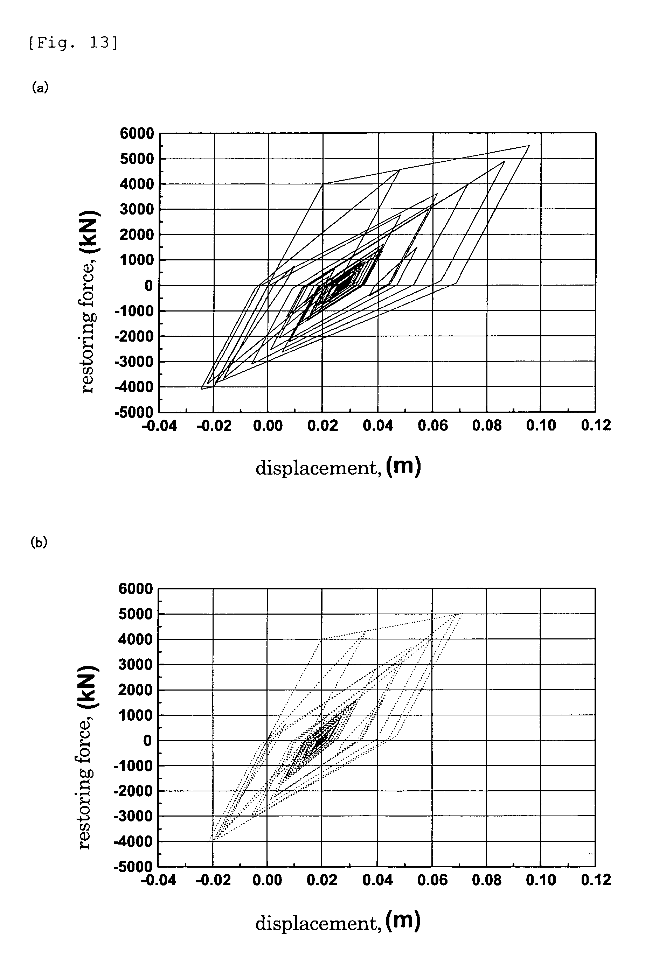

Fig. 13 shows the results of the time historical response analysis performed using Newmark-$\beta$ method. Fig. 13 (a) shows the result of the analysis conducted on the basis of the whole system model using the analysis model. For the sake of comparison, Fig. 13 (b) shows the result of analysis conducted on the basis of the conventional Voigt model assuming the elastic coefficient and the damping coefficient to be constant: the conventional Voigt model is provided with only the elastic element and damper element connected in parallel and does not take the frequency dependency into consideration. The vertical axis represents the restoring force (kN) that tends to bring the system back toward the original state, and the horizontal axis represents the loading displacement of the bridge piers (m).

Both of them started at the position of zero displacement and zero restoring force, varied to positive value along with the restoring force and the displacement, and gave damages at yield displacement of 0.02 m. According to the analysis based on the analysis model taking frequency dependency into consideration, the response displacement more than 0.09 mm was arisen; however according to the analysis based on the analysis model not considering the frequency dependency, the response displacement of approximately 0.07 mm was arisen, indicating that the degree of damage was underestimated. According to these results, the frequency dependency of the foundation-ground system made a non-negligible difference in design for the degree of damage of the upper-structure. So importance of the consideration about the frequency dependency has been confirmed.

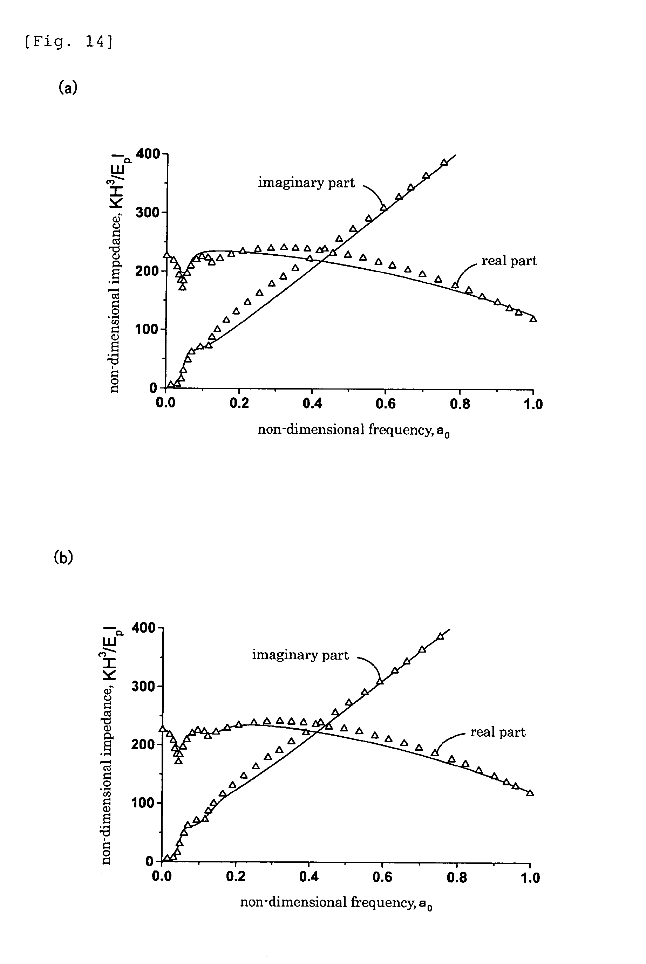

Fig. 14 (a) and (b) show the relationships between the non-dimensional frequency $a_0$ and the non-dimensional impedance ($KH^3/E_pI$) in the case where the one core system shown in Fig. 6 (a) is connected and the case where two core systems are connected. It shows the analysis result for the dynamic impedance of the pile foundation embedded in the multilayered ground that has a plurality of different cut-off-frequency. Fig. 14 (a) shows the result of one core system's case and Fig. 14 (b) shows the result of two core systems' case. Here, the K represents the dynamic impedance, H represents length of foundation in the direction of depth, $E_p$ represents Young's modulus of the foundation, and 'I' represents area second order moment of the foundation. As a method for calculating exact solutions of dynamical interaction analysis of the ground and foundation structure, there may be Novak-Nogami method. The exact solutions obtained by this method are shown in Fig. 14 (a) and (b) by triangles.

In both cases of having one core system and two core systems, as depicted by solid lines both of the resulted real part and the resulted imaginary part of the dynamic impedance was approximated to be the exact solutions. However, the analysis system using two core systems shows better approximation than the analysis system using one core system. So, it was found that the use of a plurality of the core systems permits to enhance accuracy.

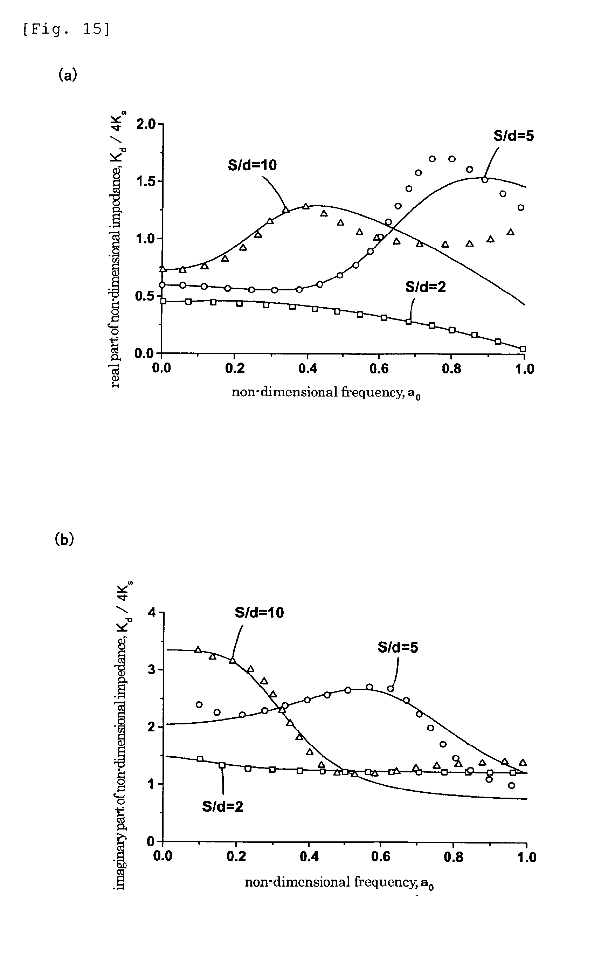

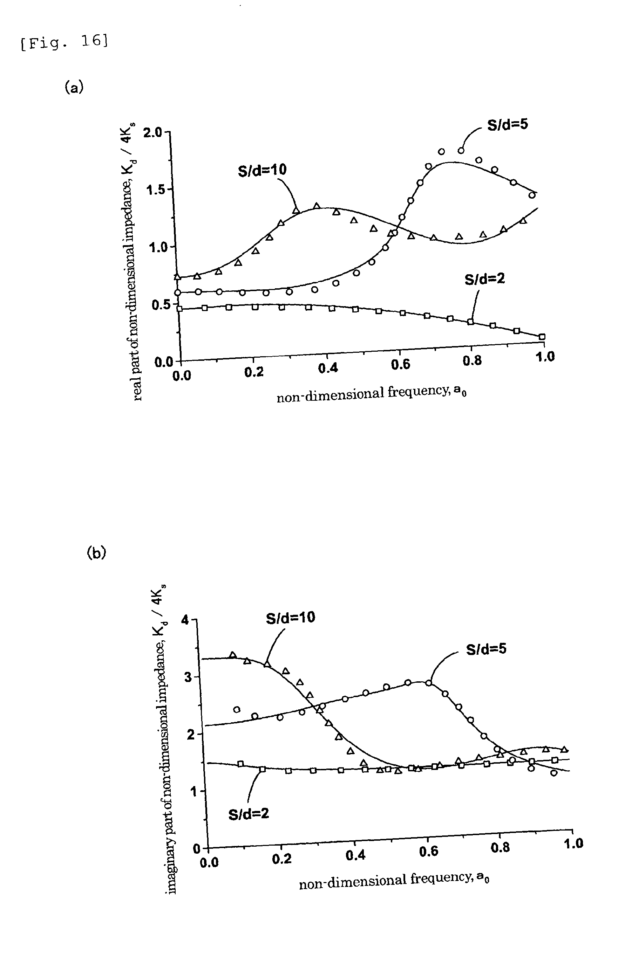

Fig. 15 (a), (b) and Fig. 16 (a), (b) show relationships between the non-dimensional frequency $a_0$ and the non-dimensional impedance ($K_d/4K_s$) in the case where the one core system shown in Fig. 6 (b) is connected and the case where two core systems are connected. It shows the analysis result for the dynamic impedance of the group pile foundation in which the impedance varies over the frequency domain. Fig. 15 (a) shows the real part of the resulted impedance and Fig. 15 (b) shows the imaginary part of the resulted impedance in the case of one core system. Fig. 16 (a) shows the real part of the resulted impedance and Fig. 16 (b) shows the imaginary part of the resulted impedance in the case of two core systems.

The symbolic squares, circles and triangles shows in Fig. 15 and Fig. 16 represent the resulted values obtained by the aforementioned Kaynia-Kausel method, under the ratios between pile interval S and pile diameter, S/d, of 2, 5 and 10, respectively. In case of using one core system, difference at the higher region of the non-dimensional frequency was increased as the S/d increasing: on the other hand, in case of using two core systems, fine approximation even at higher region of the non-dimensional frequency may be obtained. Accordingly, the use of a plurality of the core systems was found to enhance the accuracy for this case also.

As described hereinabove, whole dynamic impedance characteristics of so-called foundation-ground system that supports the upper-structure have been targeted and it has been shown that the dynamic impedance of the whole foundation-ground system may be expressed excellently. However, there exist strong frequency dependencies at the local part such as ground spring coefficient that affects on a sidewall and a pile body in the grand. So, it is more preferable if such strong frequency dependency may be considered. Hereunder, discussion will be conducted to show whether the analysis model and the analysis method according to the present invention are capable of reproducing the ground spring constant and the like finely.

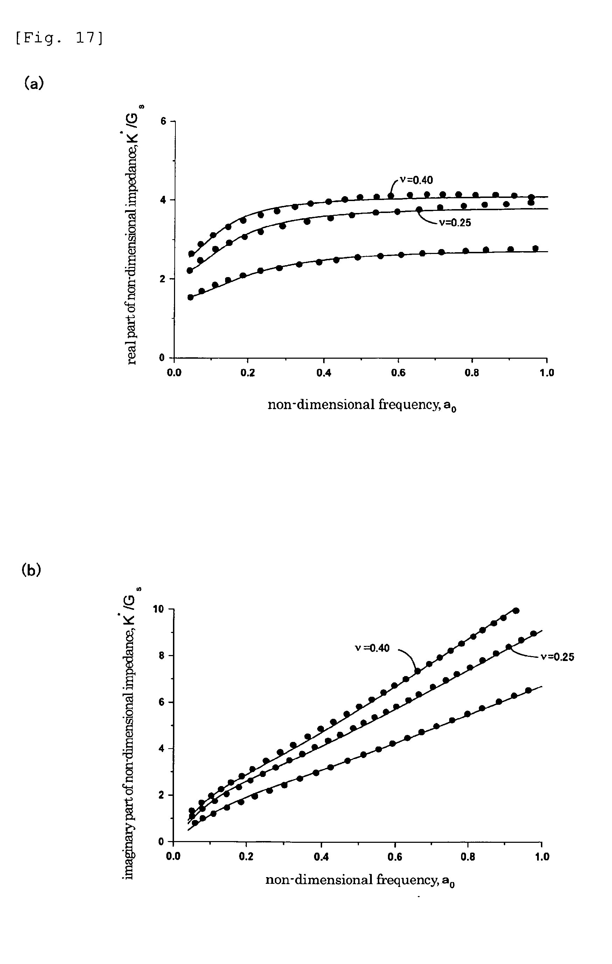

Fig. 17 shows the relationship between the non-dimensional frequency, $a_0$, and the non-dimensional lateral impedance that affects on the pile body per unit length ($K^*/G_s$) in the case where one core system shown in Fig. 6 (b) is connected. The $K^*$ represents the non-dimensional lateral impedance effected on the pile body per unit length, and the $G_s$ represents shear modulus of elasticity of the ground. Fig. 17 (a) shows the resulted real part and Fig. 17 (b) shows the resulted imaginary part. In Fig. 17 (a) and (b), v represent Poisson's ratio, which is a ratio between stretch (strain) along with loading direction and compression (strain) along with the direction perpendicular to the loading direction in size within the elastic limit. The results are shown for Poisson's ratios of 0.25 and 0.40, concurrently. For the sake of evaluation, solid circles show the exact solutions obtained by Novak method (Novak, M., "Dynamic Stiffness and Damping of Piles", Can. Geotech. J., 11, 574-598 (1974).).

As shown in Fig. 17 (a) and (b), in both case for Poisson' ratios the results approximates to the exact solution obtained by Novak method, so the ground spring was found to be expressed finely. Accordingly, not only the dynamic impedance of the whole foundation-ground system but also that of the local part such as ground spring coefficient that affects the sidewall and the pile body in the ground may be evaluated sufficiently by the analysis system and analysis method according to the present invention.

As described hereinabove, the analysis system, the analysis method, the computer readable program and the machine device according to the present invention have been so-far described by referring the drawings. However, the present invention is not limited to the specific embodiments illustrated in the drawings. It is appreciated for a person skilled in the art that there may be a lot of another embodiments, addition, deletion, alternative embodiment based on the teachings of the present description. All such embodiments, which perform the effect and function of the present invention, are intended to be included within the scope of present invention. Accordingly, the present invention may be provided as a simulation apparatus in which a computer readable program loaded on a computer.

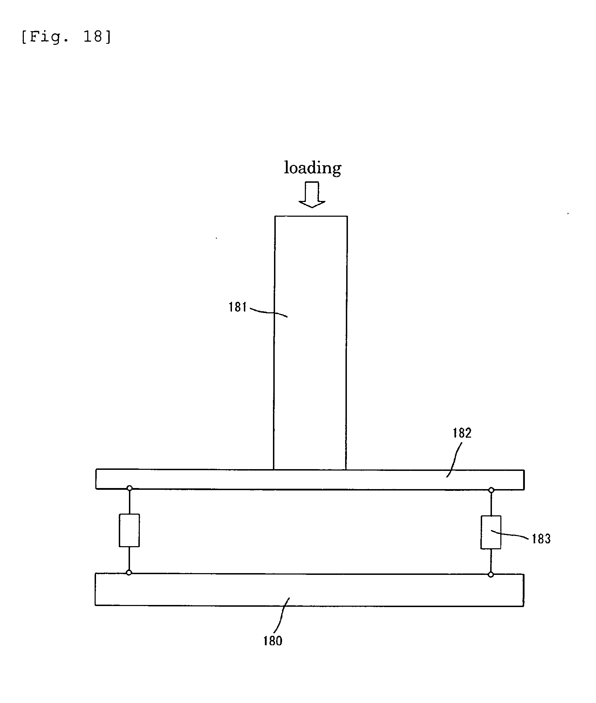

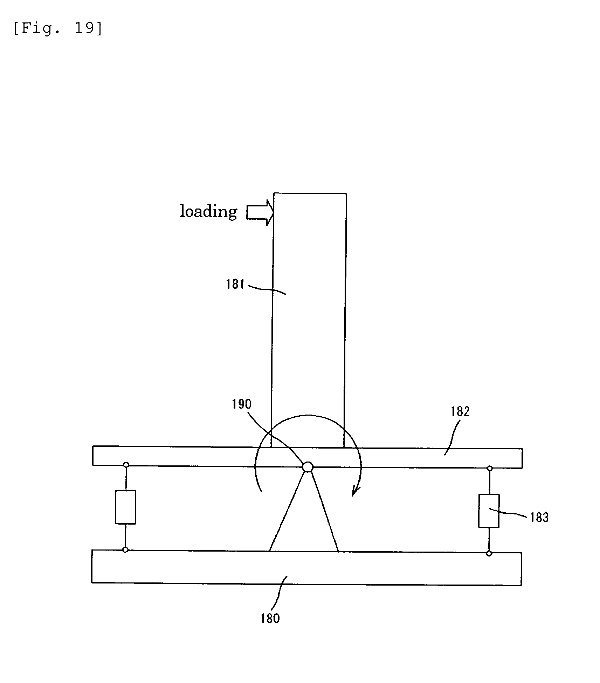

Fig. 8 shows the example of the machine device used for the test apparatus for evaluating the behavior of the upper-structure supported by the ground through the foundation. This machine device takes account of lateral impedance characteristics only. However, the present invention is not limited thereto, when the support plate 180 and the connection plate 182 which the test structure 181 being placed thereon are connected by the machine device 183 as shown in Fig. 18, it is capable of simulating the impedance characteristic with degrees of freedom in vertical direction. Furthermore, when the setup shown in Fig. 18 is provided with the rotation hinge 190, as shown in Fig. 19, it is capable of simulating the impedance characteristic with degrees of freedom in rotational direction. In these cases, the machine device shown in Fig. 8 may be used as a substitute for the support plate 180. Furthermore, the machine device shown in Fig. 19 may be used as a substitute for the support plate 180 in the Fig. 18, and the machine device shown in Fig. 18 may be used as a substitute for the support plate 180 in the Fig. 19, respectively. These machine devices may be placed on the vibration table to be inputted seismic motion.

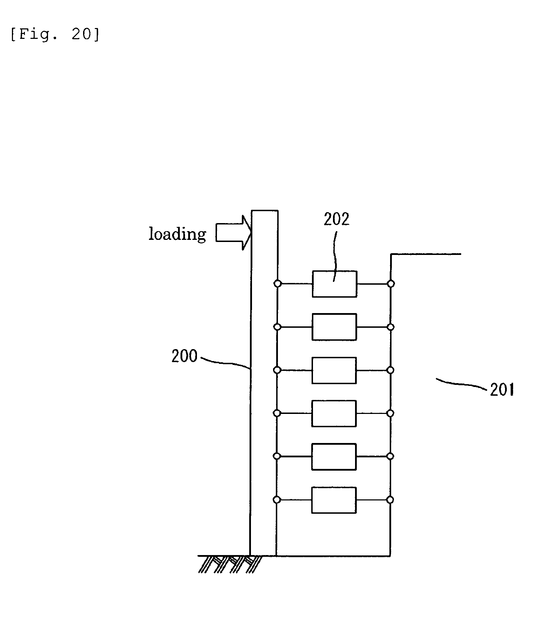

The machine devices illustrated in Fig. 8, Fig. 18 and Fig. 19 is used for the test apparatus for grasping the upper-structure. However, according to the present invention, the machine devices may be used for a test apparatus for grasping behavior of a pile body embedded in the ground. In this case, the machine devices may be placed to the side of the test pile body. For example, as shown in Fig. 20, the plurality of the machine devices may be connected between the slid wall 200 and the reaction wall 201 to construct the test apparatus.

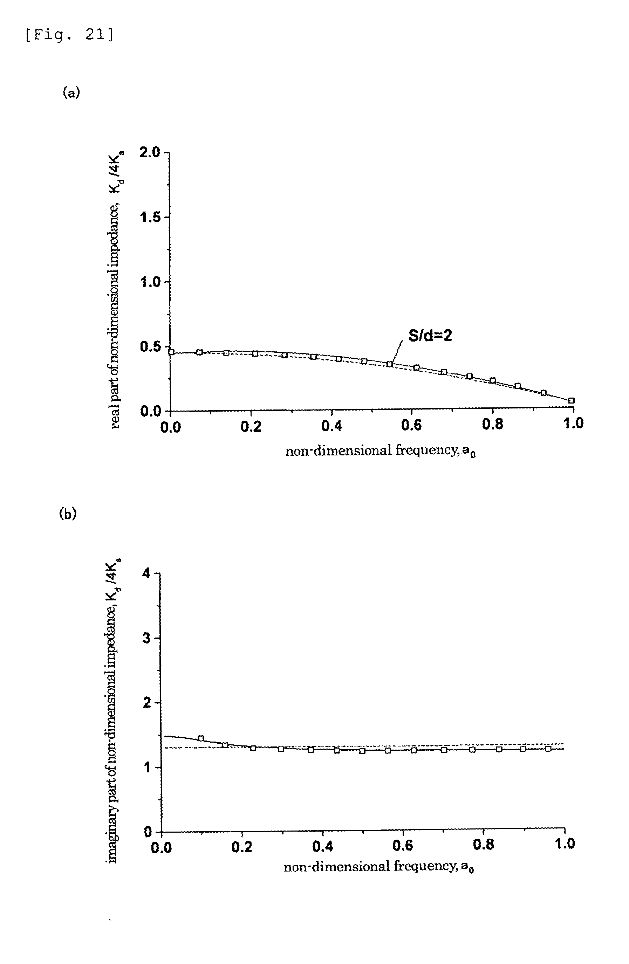

Hereinabove, the systems combined the base system and the core system has been explained as the preferable embodiment of the analysis system, the analysis method, the computer readable program and the machine device. Here, the relationship between the real part as well as the imaginary part of the non-dimensional impedance and the non-dimensional frequency shown in Fig. 15 and Fig. 16 indicates a measure of how much the analysis system combined the base system and the core system may agree with the exact solutions. In addition, Fig. 21 shows the result of the analysis system employing the base system only. The result represented by square corresponds to the exact solutions, the solid line corresponds to the result of the analysis system combined the base system and the core system and dash line corresponds to the result of the analysis system employing only the base system. As shown in Fig. 21, even in the case of employing only the base system, the result well approximates to the exact solution. So the numerical analysis using the analysis model constructed from only the base system is found to be capable of evaluating the seismic behavior of the super structure supported by the ground through the foundation finely. Accordingly, the present invention may provide an analysis system and a machine device of only the base system, as well as an analysis method employing only the base system, and computer readable program for implementing the method thereof.

[Industrial Applicability]

The analysis system would be useful for structure analysis tool since the analysis system according to the present invention is capable of taking account of nonlinear analysis that involves failures as well as analysis that takes frequency dependency into consideration, simultaneously. Furthermore, the analysis system would be useful for actual test apparatus since the analysis system is also capable of reproducing seismic responses of the foundation-ground system, and the dynamical restoration characteristics of mechanical vibrations and the like excellently, and of being integrated as the machine device.

**Claims**

**1.** An analysis system for evaluating seismic behavior of an upper-structure supported by the ground through a foundation, comprising:

an elastic element, said elastic element being deformed in response to external force while being restored upon removing the external force;
a damper element for damping vibration; and
a reaction force generation element, said reaction force generation element generating reaction force proportional to relative acceleration of both ends thereof;

wherein said analysis system reproduces dynamics characteristics of a system including said foundation and the ground.

**2.** The analysis system according to claim 1, wherein said analysis system is constructed as a base system with connecting parallel said elastic element, said damper element and said reaction generation element.

**3.** The analysis system according to claim 2, wherein said analysis system further comprises at least one core system provided with any of two elements among said elastic element, said damper element and said reaction force generation element connected in parallel and a remaining element connected thereto in series, and said base system and at least one said core system are connected parallel.

**4.** The analysis system according to claim 3, wherein said elastic element and said damper element are connected parallel in said core system, and said reaction force generation element is connected serially thereto.

**5.** The analysis system according to claim 3, wherein said damper element and said reaction force generation element are connected parallel in said core system, and said elastic element is connected serially thereto.

**6.** The analysis system according to claim 3, wherein said analysis system comprises a first core system comprising parallel connected said elastic element and said damper element associated with said reaction force generation element serially connected thereto and a second core system comprising parallel connected said damper element and said reaction force generation element associated with said elastic element serially connected thereto.

**7.** A method of operating a computer to generate an analysis model by combining a plurality of elements and to perform seismic response analysis based on said analysis model for evaluating seismic behavior of an upper-structure supported by the ground through a foundation, comprising the steps of:

retrieving each element data from a data storage part to generate a dynamic model of a base system, said element data modeling each of an elastic element, a damper element for damping vibration, and a reaction force generation element for generating reaction force proportional to relative acceleration of both ends thereof, said elastic element being deformed in response to external force while being restored upon removing said external force, each of said elements composing said analysis model for reproducing dynamic characteristics of a system including said foundation and said ground, said base system being provided with said elastic element, said damper element and said reaction force generation element connected parallel; and
performing said seismic response analysis having frequency dependency by using an elastic coefficient for said elastic element, an damping coefficient for said damper element, and a mass for said reaction force generation element inputted for said dynamical model.

**8.** The method according to claim 7, wherein said method further comprises the steps of:

generating a dynamic model of at least one core system by selecting any of two elements connected parallel among said elastic element, said damper element and said reaction force generation element and a remaining element serially connected thereto by using said each element data based on inputted information about said ground and said foundation; and

generating said analysis model, said analysis model being provided with said dynamic model of said base system and said dynamic model of at least one said core system connected parallel;

wherein said step of performing executes said seismic response analysis using said elastic coefficient, said damping coefficient and said mass inputted for said dynamical model.

**9.** The method according to claim 7 or 8, wherein said information about the ground and said foundation includes any one of information consisting of a foundation shape, a foundation type, an elastic coefficient of said ground, a damping coefficient of said ground, a ground layer thickness, Poisson's ratio of said ground, an embedment depth, and information for multilayer ground.

**9.** A computer readable program for implementing the method according to any of claims 7 to 9.

**11.** A machine device used in a test apparatus for evaluating seismic behavior of a superstructure supported by the ground through a foundation or a pile body embedded in the ground by using said test apparatus, said machine device being attached to lower part of a test structure or to a side of a test pile body, said machine device comprising:

an elastic member, said elastic member being deformed in response to external force while being restored upon removing the external force;
a damper member for damping vibration; and
a reaction force generation member, said reaction force generation member generating reaction force proportional to relative acceleration of both ends thereof;

wherein said machine device implements a analysis model of a system including said foundation and the ground.

**12.** The machine device according to claim 11, wherein said analysis system is constructed as a base system with connecting parallel said elastic member, said damper member and said reaction force generation member.

**13.** The machine device according to claim 12, wherein said machine device further comprises at least one core system provided with any of two members among said elastic member, said damper member and said reaction force generation member connected in parallel, and a remaining member connected thereto in series, and said base system and at least one said core system are connected parallel.

**14.** The machine device according to claim 13, wherein said elastic member and said damper member are connected parallel in said core system, and said reaction force generation member is connected serially thereto.

**15.** The machine device according to claim 13, wherein said damper member and said reaction force generation member are connected parallel in said core system, and said elastic member is connected serially thereto.

**16.** The machine device according to claim 13, wherein said analysis system comprises a first core system comprising parallel connected said elastic member and said damper member associated with and said reaction force generation member serially connected thereto, and a second core system comprising parallel connected said damper member and said reaction force generation member associated with said elastic member connected serially thereto.

**17.** The machine device according to any of claims 11 to 16, wherein said elastic member is a spring or a rubber, said damper member is a damper, and said reaction force generation member includes a disk-shaped rotation mass body supported rotatably at rotation axis, and a plate-shaped or bar-shaped member adjacent to circumference part of said rotation mass body.

**18.** The machine device according to claim 17, wherein said reaction force generation member includes a plurality of said rotation mass bodies and a plurality of gears having different numbers of teeth, and each of said rotation mass bodies is connected to each of said plurality of gears having different numbers of teeth.

[Fig. 1]

[Fig. 2]

[Fig. 3]

[Fig. 4]

[Fig. 5]

[Fig. 6]

(a)

(b)

[Fig. 7]

(a)

(b)

[Fig. 8]

(a)

(b)

[Fig. 9]

[Fig. 10]

(a)

(b)

[Fig. 11]

[Fig. 12]

force

α k$_s$

k$_s$

k$_s$

displacement

122

→ u$_s$

m$_s$

k$_s$

121

c$_s$

120

m$_f$

→ u$_f$

40

base system

50

core system 1

core system 2

60

→ u$_3$

K

C

M

base system

k$_{1,2}$

m$_{1,2}$

u$_{1,2}$

c$_{1,2}$

core system 1,2

[Fig. 13]

(a)

(b)

[Fig. 14]

(a)

(b)

[Fig. 15]

(a)

(b)

[Fig. 16]

(a)

(b)

[Fig. 17]

(a)

(b)

[Fig. 18]

[Fig. 19]

[Fig. 20]

[Fig. 21]

(a)

real part of non-dimensional impedance, $K_d/4K_s$

S/d=2

non-dimensional frequency, $a_0$

(b)

imaginary part of non-dimensional impedance, $K_d/4K_s$

non-dimensional frequency, $a_0$

## INTERNATIONAL SEARCH REPORT

| International application No. |
|---|
| PCT/JP2008/055239 |

A.  CLASSIFICATION OF SUBJECT MATTER
*G01M7/02*(2006.01)i, *E02D1/00*(2006.01)i, *E02D27/34*(2006.01)i, *G01M19/00* (2006.01)i

According to International Patent Classification (IPC) or to both national classification and IPC

B.  FIELDS SEARCHED

Minimum documentation searched (classification system followed by classification symbols)
G01M7/02, E02D1/00, E02D27/34, G01M19/00

Documentation searched other than minimum documentation to the extent that such documents are included in the fields searched
Jitsuyo Shinan Koho       1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)
JSTPlus(JDreamII), Science Citation Index Expanded(Web of Science)

C.  DOCUMENTS CONSIDERED TO BE RELEVANT

| Category* | Citation of document, with indication, where appropriate, of the relevant passages | Relevant to claim No. |
|---|---|---|
| A | JP 2005-213887 A  (Sumitomo Mitsui Construction Co., Ltd.), 11 August, 2005 (11.08.05), Full text; all drawings (Family: none) | 1-18 |
| A | JP 2004-245691 A  (Takenaka Corp.), 02 September, 2004 (02.09.04), Full text; all drawings (Family: none) | 1-18 |
| A | JP 2005-240839 A  (Atsushi OKUMURA), 08 September, 2005 (08.09.05), Full text; all drawings (Family: none) | 1-18 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 May, 2008 (15.05.08) | 27 May, 2008 (27.05.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/055239

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2006-071366 A  (Takenaka Corp.),<br>16 March, 2006 (16.03.06),<br>Full text; all drawings<br>(Family: none) | 1-18 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Seismic Response Analysis and Design of Buildings Considering Dynamic Ground-Structure Interaction. Second Part: Example Designs Considering the Dynamical Interaction. Architectural Institute of Japan, February 2006

- Dynamic stiffness and seismic response of pile groups. **Kaynia, A. ; Kausel, E.** Research Report, R82-03. MIT, 1982
- **Novak, M.** Dynamic Stiffness and Damping of Piles. *Can. Geotech. J.,* 1974, vol. 11, 574-598